# EUROPÄISCHE PATENTANMELDUNG

(11) **EP 2 602 098 A1**
(43) Veröffentlichungstag der Anmeldung: **12.06.2013**
(21) Anmeldenummer: 12195841.7
(22) Anmeldetag: 06.12.2012
(51) Int. Cl.: B29C 73/10

(54) **Reparaturverfahren**

(30) Priorität: 06.12.2011 DE 102011056088
(71) Anmelder: Deutsches Zentrum für Luft- und Raumfahrt e.V., 51147 Köln (DE)
(72) Erfinder: Holzhüter, Dirk, 38110 Braunschweig (DE); Hühne, Christian, 30173 Hannover (DE); Kolesnikov, Boris, 38104 Braunschweig (DE); Steffen, Olaf, 21073 Hamburg (DE)
(74) Vertreter: Aisch, Sebastian

(57) **Zusammenfassung**

Die vorliegende Erfindung betrifft ein Verfahren zum Reparieren einer Schadstelle eines Faserverbundbauteils (1) mit den Schritten:
a) Entfernen der Schadstelle und Herstellen einer Schäftung (2) im Bereich der entfernten Schadstelle,
b) Einbringen von Z-Stiften (5) in das Faserverbundbauteil (1) im Bereich der Schäftung (2),
c) Einbringen eines Reparatur-Faserhalbzeuges (6) in die Schäftung (2) derart, dass das Reparatur-Faserhalbzeug (6) um die Z-Stifte (5) herum drapiert und dass die Faserbündel des Reparatur-Faserhalbzeuges (6) durch die Z-Stifte (5) nicht beschädigt oder durchtrennt werden, und
d) Aushärten des Reparatur-Faserhalbzeuges (6).

## Beschreibung

Die Erfindung betrifft ein Verfahren zum Reparieren einer Schadstelle eines Faserverbundbauteils.

Nicht zuletzt wegen ihrer besonderen Eigenschaft bei relativ niedrigem Gewicht eine hohe Stabilität zu gewährleisten, finden Faserverbundbauteile immer mehr Anwendung in verschiedensten Bereichen, um die klassischen Werkstoffe zu ersetzen. So werden Faserverbundbauteile heutzutage vermehrt im Flugzeugbau eingesetzt, um beispielsweise Rumpfteile mit einem besonders niedrigem Gewicht herzustellen, was gerade bei Flugzeugen besonders vorteilhaft ist. Dabei werden vermehrt auch sicherheitsrelevante Flugzeugstrukturen (sogenannte Primärstrukturen) aus Faserverbundbauteilen gebildet.

Die Herstellung eines Faserverbundbauteils erfolgt in der Regel dadurch, dass ein Faserhalbzeug mit einem Matrixmaterial infiltriert und anschließend in einem Autoklaven oder Konfektionsofen ausgehärtet wird, so dass das Matrixmaterial bzw. Matrixharz reagieren kann und seine besondere Festigkeit, insbesondere in Faserrichtung, erhält. Erst durch die Reaktion des Matrixharzes entsteht die besondere Festigkeit.

Durch die Verwendung derartiger Faserverbundbauteile in sicherheitsrelevanten Flugzeugstrukturen erhöht sich allerdings auch die Wahrscheinlichkeit der Beschädigung solcher Strukturen, die, wenn eine Schadensmindestgröße überschritten wurde, repariert oder ausgetauscht werden müssen. Andernfalls kann der sichere Flugbetrieb nicht mehr gewährleistet werden, was in der Regel zu einem Flugverbot führen würde.

Da es sich bei den aus einem Faserverbundmaterial hergestellten Primärstrukturen im Allgemeinen um komplexe, integrale oder nur aufwendig demontierbare Strukturen handelt, wird aus Kostengründen stets eine Reparatur angestrebt. Dabei existieren zwei Technologien, welche die mechanische Tragfähigkeit eines Faserverbundbauteiles im benötigten Maße wieder herstellen können: die gebolzte Reparatur und die gepatchte Reparatur

Bei der gebolzten Reparatur wird über die Schadstelle ein großzügiges Materialpatch gelegt, das mit Hilfe von Bolzen oder Nieten mit der Grundstruktur kraft- und formschlüssig verbunden wird. Hierfür weist das Materialpatch entsprechende Bohrungen auf, die als Schablone für die Bohrungen in der Struktur dienen, um die darunter gelegene Struktur zu bohren. Für gewöhnlich werden zwei oder drei Nietreihen verwendet, was jedoch zu einer Schwächung der darunter liegenden Faserstruktur führen kann.

Der Vorteil der gebolzten Reparatur besteht insbesondere darin, dass sie einfach durchzuführen ist, eine lösbare Verbindung erzeugt und auch für große Wandstärken geeignet ist. Über die Verwendung mehrerer Nietreihen ist die Reparatur darüber hinaus auch "Fail-Safe", da bei Ausfall einer Niete trotzdem noch die Struktursicherheit gewährleistet werden kann.

Auf der anderen Seite werden bei der gebolzten Reparatur auch gesunde Teile der beschädigten Struktur aufgebohrt, damit die Bolzen oder Nieten platziert werden können, was aufgrund der Schädigung der Faserstruktur während des Bohrens zu einer Strukturschwächung führen könnte. Darüber hinaus ist das gebolzte Verfahren erst ab einer gewissen Mindestwandstärke geeignet, so dass bei dünnen bzw. filigran gearbeiteten Strukturen dieses Verfahren nicht angewendet werden kann. Darüber hinaus wird insbesondere im Außenbereich von Flugzeugstrukturen durch die gebolzte Reparatur die Oberflächenstruktur gestört, was zu negativen aerodynamischen Eigenschaften führen kann.

Die zweite Reparaturmethode ist die gepatchte Reparatur. Dabei wird die Schadstelle des Faserverbundbauteils entfernt, beispielsweise durch Ausbohren der beschädigten Stelle. Anschließend werden die Bohrränder in einem flachen Winkel abgeschrägt, um eine entsprechende Schäftung im Bereich der entfernten Schadstelle herzustellen. In dem Bereich der Schäftung wird nun ein Reparaturpatch, beispielsweise aus einem trockenem oder vorgetränktem Faserhalbzeug, eingelegt und mit dem Faserverbundbauteil verklebt, um so die Schadstelle auszubessern. Das Faserhalbzeug, welches mit dem Matrixmaterial infiltriert ist, wird dann entsprechend den aus dem Stand der Technik bekannten Verfahren ausgehärtet.

Der Vorteil hierbei besteht darin, dass es bei dieser Reparatur zu keiner Gewichtszunahme des Faserverbundbauteils kommt und letztendlich dieselbe Steifigkeit erzielt werden kann wie das gesunde Material. Darüber hinaus ist keine Mindestwandstärke erforderlich und es wird auch keine gesunde Faserstruktur des Faserverbundbauteils unnötigerweise beschädigt, von der Schäftung einmal abgesehen.

Nachteilig insbesondere hierbei ist jedoch, dass die gepatchte Reparatur sehr zeitaufwendig ist und ein höheres Qualifikationsniveau des Personals bedarf. Außerdem muss der Reparaturbereich getrocknet werden und die Oberflächen entsprechend vorbereitet werden, um die Wahrscheinlichkeit einer späteren Ablösung des Patches zu verringern. Darüber hinaus ist die gepatchte Reparatur nicht "Fail-Safe", da bei Ablösen des Patches im Betrieb die Struktur des Faserverbundbauteils geschwächt wird, was zu einem Totalausfall der Strukturen führen kann.

So ist es beispielsweise aus der US 5,868,886 bekannt, eine gepatchte Reparaturstelle mit Z-Stiften zu verstärken. Dabei wird an der Schadstelle eine Schäftung erzeugt und anschließend ein vorgefertigtes Reparaturpatch aus einem Faserverbundmaterial in die Schäftung eingeklebt. Anschließend werden Z-Stifte durch das Reparaturpatch in die Struktur des Faserverbundbauteils getrieben, um das Reparaturpatch mit dem Faserverbundbauteil zu verbinden. Ein Teil der eingebrachten Stifte wird anschließend wieder entfernt, wobei in die entstehenden Löcher dann ein Matrixharz eingebracht und anschließend das Ganze ausgehärtet wird.

Durch die Verbindung der gebolzten Reparatur mit der gepatchten Reparatur wird die gepatchte Reparaturmethode "Fail-Safe", wobei die Festigkeit und Stabilität der Reparaturstelle erhöht wird, ohne die Nachteile der gebolzten Reparatur in Kauf nehmen zu müssen.

Allerdings weist die in der US 5,868,886 angegebene Reparaturmethode den erheblichen Nachteil auf, dass durch das Einbringen der Z-Stifte in das Reparaturpatch im Anschluss an das Einbringen des Reparaturpatches in die Schäftung die Faserstruktur des Reparaturpatches beschädigt werden kann, was zu einer geringeren Festigkeit der Reparaturmethode führt. Dies kann sogar so weit gehen, dass durch das Einbringen der Z-Stifte in das Reparaturpatch dieses so beschädigt wird, dass trotz Vorhandenseins der Z-Stifte die Festigkeit derart beeinträchtigt wird, dass eine geringere Stabilität als ohne Z-Stifte erreicht wird.

Aus der DE 10 2008 039 223 B3 ist darüber hinaus ein Verfahren zur Herstellung einer Faserverbundstruktur angegeben, bei der Heftklammern zwischen zwei zusammenzusetzende Faserverbundbauteile verwendet werden, die an zumindest einer der beiden flächigen Seiten der Bauteile herausragen, wodurch ein Zusammenheften von Faserverbundbauteilen definiert wird.

Vor dem Hintergrund des genannten Standes der Technik ist es Aufgabe der vorliegenden Erfindung, ein Reparaturverfahren für beschädigte Faserverbundbauteile anzugeben, das "Fail-Safe" ist und sicherstellt, dass durch die Reparatur des Faserverbundbauteils die Festigkeit und Stabilität nicht negativ beeinträchtigt wird.

Die Aufgabe wird mit dem Verfahren zum Reparieren einer Schadstelle eines Faserverbundbauteils der eingangs genannten Art erfindungsgemäß gelöst mit den Schritten:
a) Entfernen der Schadstelle und Herstellen einer Schäftung im Bereich der entfernten Schadstelle,
b) Einbringen von Z-Stiften in das Faserverbundbauteil im Bereich der Schäftung,
c) Einbringen eines Reparatur-Faserhalbzeuges in die Schäftung derart, dass das Reparatur-Faserhalbzeug um die Z-Stifte herum drapiert und dass die Faserbündel des Reparatur-Faserhalbzeuges durch die Z-Stifte nicht beschädigt oder durchtrennt werden, und
d) Aushärten des Reparatur-Faserhalbzeuges.

Erfindungsgemäß wird somit vorgeschlagen, dass zunächst die Z-Stifte in das Faserverbundbauteil im Bereich der Schäftung, die zuvor zum Entfernen der Schadstelle hergestellt wurde, eingebracht werden, wobei anschließend dann das Reparaturpatch in die Schäftung eingelegt wird. Dabei wird das Reparatur-Faserhalbzeug in die Schäftung so eingebracht, dass das Reparatur-Faserhalbzeug um die in der Schäftung befindlichen Z-Stifte herum drapiert wird und dass die Faserbündel des Reparatur-Faserhalbzeuges durch die Z-Stifte nicht beschädigt oder durchtrennt werden. Denn das Drapieren des Reparatur-Faserhalbzeuges um die Stifte im Schäftungsbereich herum führt dazu, dass die Faserbündel im Schäftungsbereich um die Z-Stifte umgelenkt werden, so dass sich das Reparatur-Faserhalbzeug (Reparaturpatch) in den Schäftungsbereich zwischen die Stifte drückt.

Die Erfinder haben hierbei erkannt, dass durch das Drapieren des Reparatur-Faserhalbzeuges um die Stifte herum dieser erfindungsgemäße und besonders vorteilhafte Effekt entsteht, nämlich dass die Faserbündel nicht beschädigt oder durchtrennt werden. Durch die Faserumlenkung bleibt somit die Kontinuität des Lastpfades innerhalb des Reparaturpatches erhalten, so dass nicht die Gefahr besteht, dass durch die Reparatur mit Hilfe eines Reparaturpatches und Z-Stiften die Stabilität im Endergebnis beeinträchtigt ist.

Darüber hinaus wurde von den Erfindern ebenfalls erkannt, dass die Faserumlenkung in Faserrichtung eine Verringerung des Faservolumengehaltes in Lastrichtung der Laminatschicht bewirkt, was als lokales Softening angesehen werden kann und sich positiv auf die Verteilung des Traglastanteils der Einzelstifte auswirkt.

Vorteilhafterweise werden in das zu reparierende Faserverbundbauteil im Schäftungsbereich Bohrungen für die Z-Stifte erzeugt und die Z-Stifte anschließend in die Bohrung eingebracht und dort fixiert. Die zusätzliche Kombination dieses Verfahrens mit einem Vakuum-Infusionsverfahren bewirkt dabei im Bereich der Stiftbohrungen in dem Faserverbundbauteil ein Ausheilen produktionsbedingter Mikrorisse.

Besonders vorteilhaft ist es, wenn die Z-Stifte aus einem metallischen Material, insbesondere aus Federstahldraht, gebildet sind.

Die Z-Stifte weisen einen Durchmesser von 0,5 mm bis 1,5 mm, bevorzugt 1 mm, auf. Dies hat den Vorteil, dass durch den geringen Durchmesser die für das Einbringen der Z-Stifte in das Faserverbundbauteil notwendigen Bohrungen sehr klein und somit die Beschädigung des Faserverbundbauteils in seiner Grundstruktur sehr gering ausfällt.

Vorteilhafterweise wird die Abschrägung der Schäftung im Bereich der Schadensstelle mit einem flachen Winkel zwischen 2° bis 8°, besonders bevorzugt in einem Winkel von 3° bis 5°, gebildet. Durch den flachen Winkel wird die Oberfläche für die Reparatur vergrößert, was sich besonders vorteilhaft auf das Ergebnis der reparierten Struktur auswirkt.

In einer vorteilhaften Ausführungsform wird das Reparatur-Faserhalbzeug ungetränkt in den Schäftungsbereich eingebracht und anschließend mit aus dem Stand der Technik bekannten Infiltrationsverfahren mit Matrixharz infiltriert. Der Vorteil hierbei ist, dass auch kleine Mikrorisse, die durch die Bohrung in dem Faserverbundbauteil für die Z-Stifte entstehen, geschlossen werden.

In einer Ausführungsform wird ein bereits vorgetränktes Reparatur-Faserhalbzeug in dem Schäftungsbereich eingebracht, sogenannte Prepregs, wodurch sich der Aushärtvorgang und somit der gesamte Reparaturzyklus stark vereinfacht.

Die Erfindung wird anhand der beigefügten Figur beispielhaft näher erläutert. Es zeigt:

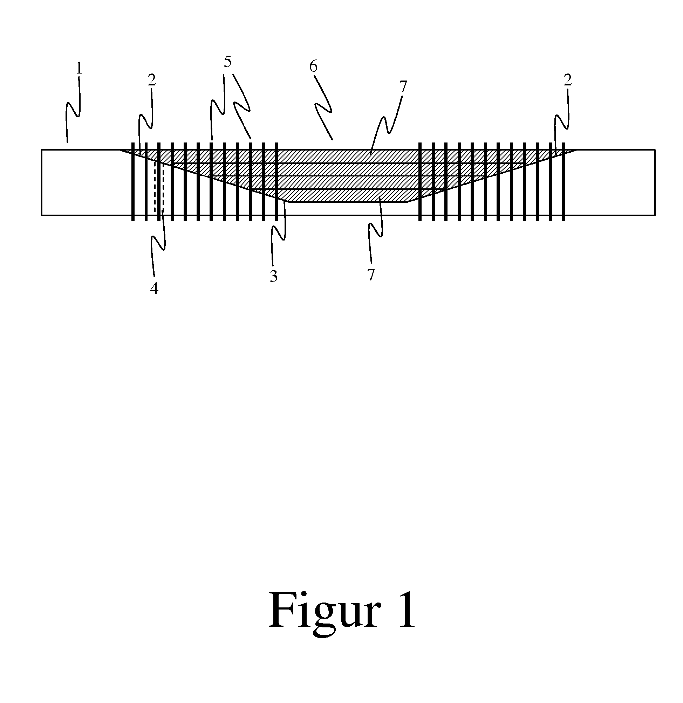

- Figur 1 -: repariertes Faserverbundbauteil.

Figur 1 zeigt ein repariertes Faserverbundbauteil 1, das mittels des vorliegenden Reparaturverfahrens repariert wurde. Dafür wurde eine Schäftung 2 im Bereich der früheren Schadstelle des Faserverbundteils 1 hergestellt, indem die Schadstelle entfernt und die Materialränder zueinander abgeschrägt wurden. Die Abschrägung ist mit dem Bezugszeichen 3 gekennzeichnet.

Anschließend wurden Bohrungen 4 in das Faserverbundbauteil 1 gebohrt, in die anschließend eine Mehrzahl von Z-Stiften 5 eingebracht und dort fixiert wurden. Die Fixierung kann beispielsweise kraft- und formschlüssig derart erfolgen, dass die Bohrung 4 mit einem Durchmesser so gewählt wird, dass sich die Stifte 5 mit ein wenig Kraftaufwand hineinstecken lassen.

Nachdem die Z-Stifte in dem Faserverbundbauteil 1 eingebracht und fixiert wurden, wird nun ein Reparatur-Faserhalbzeug 6 in die Schäftung 2 eingebracht, um das Faserverbundbauteil 1 zu reparieren. Dabei wird das Reparatur-Faserhalbzeug 6 um die Z-Stiften 5 herum drapiert, so dass die Faserbündel des Reparatur-Faserhalbzeuges 6 durch die Stifte 5 nicht beschädigt oder durchtrennt werden.

Im Ausführungsbeispiel der Figur 1 besteht das Reparatur-Faserhalbzeug 6 aus mehreren Fasergelegen 7, die einzeln nacheinander in die Schäftung 2 eingebracht und um die Z-Stiften 5 drapiert werden. Die einzelnen Reparatur-Fasergelege 7 weisen dabei eine unterschiedliche Größe auf, um so halbwegs formschlüssig in die Schäftung 2 hineinzupassen. Anschließend wird das Reparatur-Faserhalbzeug 6 ausgehärtet, beispielsweise mit Hilfe einer Heizmatte oder ähnlichem.

## Patentansprüche

1. Verfahren zum Reparieren einer Schadstelle eines Faserverbundbauteils (1) mit den Schritten:
a) Entfernen der Schadstelle und Herstellen einer Schäftung (2) im Bereich der entfernten Schadstelle,
b) Einbringen von Z-Stiften (5) in das Faserverbundbauteil (1) im Bereich der Schäftung (2),
c) Einbringen eines Reparatur-Faserhalbzeuges (6) in die Schäftung (2) derart, dass das Reparatur-Faserhalbzeug (6) um die Z-Stifte (5) herum drapiert und dass die Faserbündel des Reparatur-Faserhalbzeuges (6) durch die Z-Stifte (5) nicht beschädigt oder durchtrennt werden, und
d) Aushärten des Reparatur-Faserhalbzeuges (6).

2. Verfahren nach Anspruch 1, **dadurch gekennzeichnet, dass** die Bohrungen (4) in dem Faserverbundbauteil (1) im Bereich der Schäftung (2) erzeugt und die Z-Stifte (5) in die Bohrungen (4) eingebracht und dort fixiert werden.

3. Verfahren nach Anspruch 1 oder 2, **dadurch gekennzeichnet, dass** die Z-Stifte (5) aus einem metallischen Material, insbesondere aus Federstahldraht, gebildet sind.

4. Verfahren nach einem der vorgehenden Ansprüche, **dadurch gekennzeichnet, dass** die Z-Stifte (5) einen Durchmesser von 0,5 mm bis 1,5 mm, bevorzugt 1 mm, aufweisen.

5. Verfahren nach einem der vorhergehenden Ansprüche, **dadurch gekennzeichnet, dass** die Schäftung (2) durch Abschrägen von Materialrändern des Faserverbundbauteils (1) im Bereich der Schadstelle gebildet wird.

6. Verfahren nach Anspruch 5, **dadurch gekennzeichnet, dass** die Abschrägung (3) mit einem flachen Winkel zwischen 2° bis 8°, bevorzugt 3° bis 5°, gebildet wird.

7. Verfahren nach einem der Ansprüche 1 bis 6, **dadurch gekennzeichnet, dass** das Reparatur-Faserhalbzeug (6) ungetränkt in die Schäftung (2) eingebracht und anschließend mit einem Matrixharz infiltriert wird.

8. Verfahren nach einem der Ansprüche 1 bis 6, **dadurch gekennzeichnet, dass** das Reparatur-Faserhalbzeug (6) mit einem Matrixharz vorgetränkt (Prepreg) in die Schäftung (2) eingebracht wird.
